# EUROPÄISCHE PATENTSCHRIFT

(11) **EP 2 210 088 B1**
(45) Veröffentlichungstag und Bekanntmachung des Hinweises auf die Patenterteilung: **21.01.2015**
(21) Anmeldenummer: 08849805.0
(22) Anmeldetag: 10.11.2008
(51) Int. Cl.: G01N 30/84

(54) **VERFAHREN UND VORRICHTUNG ZUR ISOTOPENVERHÄLTNISANALYSE**
METHOD AND DEVICE FOR ISOTOPIC RATIO ANALYSIS
PROCÉDÉ ET DISPOSITIF POUR ANALYSER LES RAPPORTS ISOTOPIQUES

(30) Priorität: 13.11.2007 DE 102007054420
(43) Veröffentlichungstag der Anmeldung: 28.07.2010
(73) Patentinhaber: Thermo Fisher Scientific (Bremen) GmbH, 28199 Bremen (DE)
(72) Erfinder: KRUMMEN, Michael, 26129 Oldenburg (DE); SCHWIETERS, Johannes, 27777 Ganderkesee (DE); GRIEP-RAMING, Jens, 27777 Ganderkesee (DE)
(74) Vertreter: Heiland, Karsten
(86) Internationale Anmeldenummer: PCT/EP2008/009474
(87) Internationale Veröffentlichungsnummer: WO 2009/062652

(56) Entgegenhaltungen:
- EP-A- 0 268 434
- WO-A-02/16927
- WO-A-2007/115423
- WO-A1-2005/111600
- BRENNA J T ET AL: "High-precision continuous-flow isotope ratio mass spectrometry." MASS SPECTROMETRY REVIEWS 1997 SEP-OCT, Bd. 16, Nr. 5, September 1997 (1997-09), Seiten 227-258, XP002515242 ISSN: 0277-7037

## Beschreibung

Die Erfindung betrifft ein Verfahren und eine Vorrichtung zur Isotopenverhältnisanalyse. Unter den Begriff der Isotopenverhältnisanalyse fällt vorzugsweise auch die Analyse nur eines Isotops.

Zur Durchführung der Isotopenverhältnisanalyse werden hochpräzise Isotopenanalysatoren verwendet, beispielsweise spezielle Massenspektrometer (IRMS), Laserabsorptionsmesseinrichtungen, optische Detektoren oder andere geeignete Analysatoren oder isotopenselektive Detektoren. Den Analysatoren sind in der Regel gasförmige Substanzen zuzuführen. Besonderheiten sind deshalb bei der Analyse von Flüssigkeiten oder Feststoffen zu berücksichtigen. Diese können beispielsweise als Gemisch über einen Flüssigchromatographen (LC oder HPLC) bereitgestellt werden. In dem Flüssigchromatographen erfolgt eine zeitliche Trennung der in der Flüssigkeit gelösten Substanzen. Angewendet wird die Flüssigchromatographie unter anderem auf Substanzen, die Kohlenstoff, Stickstoff, Sauerstoff, Wasserstoff und/oder Schwefel enthalten. Zur Isotopenverhältnisbestimmung der genannten Elemente ist eine Überführung der Substanzen (Analyten) in gasförmige Umwandlungsprodukte erforderlich. Geeignete (einfache oder stabile) Gase sind typischerweise zumindest H₂, CO, CO₂, N₂, Cl₂, HCl, CH₄ und SO₂. Weitere Gase sind möglich.

Die Kopplung eines Flüssigchromatographen mit einem IRMS ist beispielsweise bekannt aus der DE 102 16 975. Gemäß dem dort beschriebenen Verfahren wird aus dem Eluat eines Flüssigchromatographen Gas in Gegenwart des Eluats erzeugt. Die im Eluat gelösten Analysesubstanzen werden in das Gas überführt. Anschließend wird das Gas vom Eluat getrennt und dem IRMS zugeführt.

Eine Besonderheit stellt auch die Isotopenverhältnisanalyse auf der Grundlage flüssiger, organischer Proben dar, beispielsweise zur Bestimmung der Kohlenstoffisotope 13C und 12C. Geeignete Verfahren zur Berücksichtigung des in einer Analysesubstanz enthaltenen Kohlenstoffs aus löslichen Verbindungen oder nur aus organischen Verbindungen sind in der DE 10 2004 010 969 offenbart.

Aus der DE 10 2005 049 152 ist es bekannt, das Eluat eines Flüssigchromatographen einer Elektrolyse auszusetzen zur Bildung und Bereitstellung einer gasförmigen Substanz oder eines Vorprodukts für eine Substanz, welche von einem IRMS analysiert werden kann.

Schließlich ist es bekannt, flüssige oder feste Proben in einem sogenannten Element-Analysator durch Pyrolyse oder Oxidation umzuwandeln und so interessierende Bestandteile in Gasform für eine Isotopenanalyse bereitzustellen. Ein derartiger Element-Analysator ist beispielsweise der Finnigan TC/EA der Anmelderin bzw. der Thermo Electron Corporation, letztere inzwischen bezeichnet als Thermo Fisher Scientific.

In dem Aufsatz von Brenna et al. "high-precision continuous-flow isotope ratio mass spectrometry" Mass Spectrometry Reviews 1997, Bd.16, Nr. 5, September 1997, Seiten 227-258, ist eine Übersicht über den Stand der Technik für einen Teilbereich der Isotopenmassenspektrometrie wiedergegeben. Unter anderem angesprochen ist die Kombination aus Flüssigchromatographie (LC) und Isotopenverhältnismassenspektrometrie (IRMS), siehe Seiten 243-245. Dargestellt ist dort das Konzept des kontinuierlich umlaufenden "moving belt", welcher aus rostfreiem Stahl besteht. Das gesamte vom LC erzeugte Eluat wird im weiteren Verlauf des Verfahrens untersucht und hierzu auf den "moving belt" aufgetragen.

Die EP 0 268 434 A2 offenbart die Kombination aus LC und Flammionisationsdetektor (FID). Als Interface ist eine sternförmige Anordnung von Speichen aus Quarz vorgesehen. Das Eluat des LC gelangt auf die Speichen und wird von diesen an dem Flammionisationsdetektor vorbeigeführt.

Die WO 02/16927 A2 befasst sich mit der Kopplung eines flüssigchromatographischen Verfahrens mit einem AMS-System. AMS steht für "Accelerator Mass Spectrometry". Mit dieser Methode werden insbesondere Isotopen von Kohlenstoff und Wasserstoff biologischer Proben quantitativ bestimmt, etwa ¹⁴C oder ³H. Die Isotopenverhältnisanalyse bzw. LC-IRMS sind nicht angesprochen.

Die WO 2007/115423 A1 offenbart eine Vorrichtung für die Isotopenanalyse bzw. die Analyse der Isotopen-Zusammensetzung von Wasserstoff in einer Probe, unter Verwendung eines Isotopen-Massenspektrometers und einer Äquilibrierungskammer.

Die WO 2005/111600 A1 offenbart ein flüssigchromatographisches Verfahren, die Abtrennung einer interessierenden Komponente und die Analyse einer Probe durch ein Massenspektrometer. Anstelle eines Flüssigchromatographen kann auch ein Gaschromatograph vorgesehen sein.

Den bekannten Verfahren ist gemeinsam, dass die Bereitstellung der gasförmigen Substanz für die Isotopenanalyse nicht beliebig durchführbar ist. Zumindest aus kosten- und messtechnischen Gründen können die gasförmigen Substanzen nur aus bestimmten Eluaten gebildet werden. Derart ideale Eluate liegen häufig nicht vor. Insbesondere gilt dies bei der Bestimmung von Isotopenverhältnissen in Pharmazeutika, Pestiziden, Lebensmittelzusatzstoffen und anderen Substanzen, die relativ große Moleküle enthalten.

Auf der Seite der Anwender existieren oftmals umfängliche Analyseeinrichtungen zur qualitativen Bestimmung von Substanzen. Hierzu zählen auch Hochleistungsflüssigchromatographen (HPLC), die darüber hinaus auf spezielle Substanzen abgestimmt sein können. Ein derart spezielles HPLC-System ist bekannt aus Analytical Chemistry, 1998, Vol. 70, 409-414, Gillian P. McMahon and Mary T. Kelly "Determination of Aspirin and Salicylic Acid in Human Plasma by Column-Switching Liquid Chromatography Using On-Line Solid-Phase Extraction". Offenbart ist ein HPLC, bei dem eine injizierte Probe zunächst von einem Lösungsmittel mitgenommen und über eine erste Säule geführt wird. Anschließend wird eine Teilmenge der Probe durch eine mobile Phase aus der ersten Säule herausgetragen und über eine zweite Säule geführt. Das Eluat der zweiten Säule wird durch einen UV-Detektor geleitet und dort analysiert. Das Eluat ist aufgrund des enthaltenen Lösemittels für die unmittelbare Umsetzung in ein für die Isotopenanalyse geeignetes Gas nicht geeignet. Der Anwender müsste in diesem Fall sein HPLC-Verfahren zur Analyse von Aspirin und Salicylsäure an die Besonderheiten der Isotopenanalyse anpassen. Insbesondere an dieser Stelle setzt die Erfindung an. Ziel ist die Bereitstellung eines Verfahrens und einer Vorrichtung, derart, dass der Anwender sein etabliertes LC-Verfahren (insbesondere HPLC-Verfahren) beibehalten kann und zugleich eine Isotopenverhältnisanalyse möglich ist. Hierzu weist das erfindungsgemäße Verfahren die Merkmale des Anspruchs 1 auf. Folgende Schritte sind Bestandteile des Verfahrens:
a) Durchführung eines Flüssigchromatographie-Verfahrens und dadurch Bereitstellung eines Eluats, welches zumindest ein flüssiges Trägerfluid und einen oder mehrere Analyten enthält,
b) Auffangen des Eluats auf einem Substrat (11), wobei nur ein interessierender Teil des Eluats, nämlich ein Teil-Eluat aufgefangen wird, wobei die Abgabe des interessierenden Teil-Eluats auf das Substrat durch programmgesteuertes Umschalten zwischen verschiedenen Leitungen am Ausgang einer Flüssigchromatographie-Einrichtung erfolgt, insbesondere in Abhängigkeit vom Zeitverlauf des Flüssigchromatographie-Verfahrens oder vom Ausgangssignal eines Detektors,
c) als Substrat (11) wird ein Behälter mit einem Hohlraum verwendet,
d) Aufbereitung des Teil-Eluats unter Bildung eines oder mehrerer gasförmiger Umwandlungsprodukte der Analyten, nämlich von einfachen stabilen Gasen wie CO2, N2, CO, H2, Cl2, HCl, CH4, SO2 oder anderen Gasen, wobei das Trägerfluid vom Substrat (11) aus verdampft oder in gasförmige Fragmente überführt wird, und anschließend der nicht verdampfte oder in gasförmige Fragmente überführte Teil des Teil-Eluats verbrannt-oxidiert oder pyrolisiert - wird,
e) zur Durchführung der Verbrennung - Oxidation oder Pyrolyse - wird das Substrat (11) mit dem Teil-Eluat oder mit einem Teil des Teil-Eluats in einen Reaktor (19) gegeben, so dass bei der Verbrennung im Reaktor die gasförmigen Umwandlungsprodukte der Analyten gebildet werden,
f) Zufuhr der gasförmigen Umwandlungsprodukte zu einem Isotopen-Massenspektrometer (IRMS).

Vom Eluat des LC wird nur der interessierende Teil aufgefangen, nämlich "herausgeschnitten". Dieses Teil-Eluat gelangt dabei insbesondere auf ein Substrat, welches als Träger des Teil-Eluats bei der weiteren Aufbereitung desselben von Bedeutung sein kann. Optional können zunächst mehrmals hintereinander die interessierenden Teil-Eluate aufgefangen und gespeichert werden. Dadurch können größere Mengen aufbereitet werden.

Vorteilhafterweise wird bei der Aufbereitung des Teil-Eluats das Trägerfluid verdampft oder in gasförmige Fragmente überführt. Insbesondere wird der nicht verdampfte und nicht in gasförmige Fragmente überführte Teil des Teil-Eluats unter Bildung gasförmiger Umwandlungsprodukte verbrannt - oxidiert oder pyrolysiert. Das Verdampfen und/oder Verbrennen erfolgt vorzugsweise auf dem Substrat. Das Verdampfen kann durch eine Erwärmung des Substrats, durch Laser oder auf andere Weise erfolgen.

Nach einem weiteren Gedanken der Erfindung ist vorgesehen, dass das Verdampfen oder Überführen des Trägerfluids durch mindestens einen der folgenden Schritte erfolgt:
a) Aufheizen des Teil-Eluats,
b) Lasereinwirkung,
c) resonante Energieeinkopplung durch elektromagnetische Strahlung,
d) nicht-resonante Energieeinkopplung durch elektromagnetische Strahlung,
e) chemisch-selektive Umsetzung.

Als Trägerfluid bzw. Lösungsmittel wird beispielsweise Methanol, Ethanol, Acetonitril, Wasser oder ein Gemisch aus Lösungsmitteln verwendet. Die derart gebildete, leichter flüchtige mobile Phase wird von dem Teil-Eluat im Übrigen vorzugsweise getrennt durch Verdampfen. Das Verdampfen kann beispielsweise durch Heizen, durch Einwirkung eines Lasers, durch eine Mikrowellenheizung oder eine selektive Aufheizung des Lösungsmittels durch resonante Einstrahlung einer Wellenlänge geschehen. Dabei wird das Teil-Eluat auf eine Temperatur gebracht, bei der das Lösungsmittel verdampft, nicht aber die zu untersuchenden Analyten.

Möglich ist auch eine Verdampfung des Lösungsmittels mit oder ohne Temperaturerhöhung durch eine selektive chemische Reaktion, beispielsweise mittels eines Ätzgases (chemisches Ätzen). Eine derartige chemisch-selektive Umsetzung ist aus anderen Bereichen bekannt, etwa aus der Halbleiterindustrie und der Herstellung bzw. Modifikation von organischen Filmen mittels chemischer Reaktionen.

Möglich ist auch eine örtlich aufgelöste Verdampfung mit einer örtlich fokussierten Energieeinstrahlung, z. B. mit einem fokussierten Laserstrahl oder einer Bündelung elektromagnetischer Strahlung auf einen kleinen Fleck.

Vorzugsweise werden der Lösungsmitteldampf oder die durch die Behandlung des Teil-Eluats entstehenden gasförmigen Substanzen mit Hilfe eines Trägergases abgeführt. Ist alles Lösungsmittel in die Gasphase überführt und entfernt, werden in einem zweiten Schritt, z. B. durch Erhöhen der Temperatur, oder der Laser- oder der Mikrowellenleistung der verbliebene Rest des Teil-Eluats (Teil-Eluat im Übrigen) in die Gasphase überführt. Dabei können sowohl die Moleküle hiervon als auch Fragmente in die Gasphase überführt werden. Die Fragmente können z. B. durch Energiezufuhr (Wärme, Laser, Mikrowelle usw.) gebildet werden. Für eine Isotopenanalyse ist es wichtig, dass die Substanz quantitativ in die Gasphase überführt wird. In einem nachfolgenden Umsetzungsschritt können die nun als Gase vorliegenden Moleküle oder Fragmente in die für die Isotopenanalytik benötigten einfachen Gase umgesetzt werden.

Vorteilhafterweise werden die gasförmigen Umwandlungsprodukte insbesondere aus dem nicht verdampften und nicht in gasförmige Fragmente überführten Teil des Teil-Eluats gebildet durch mindestens einen der folgenden Schritte:
a) Verbrennung oder Pyrolyse,
b) Umwandlung in einem Reaktor,
c) Lasereinwirkung,
d) resonante Energieeinkopplung durch elektromagnetische Strahlung,
e) nicht-resonante Energieeinkopplung durch elektromagnetische Strahlung,
f) chemisch-selektive Umsetzung.

Auf diese Weise werden einfache stabile Gase gebildet, wie CO₂, N₂, CO, H₂, CL₂, HCL, CH₄, SO₂ oder andere Gase. Die Umsetzung in die einfachen stabilen Gase kann beispielsweise erfolgen durch
- Reaktoren, in denen die gasförmigen Substanzen an Metalloxiden zu CO₂ und/oder N₂ und/oder SO₂ reagieren,
- Reaktoren, in denen die gasförmigen Substanzen bei hohen Temperaturen zu H₂ und/oder CO₂ pyrolisiert werden,
- Lasereinwirkung, wobei die gasförmigen Substanzen durch Laserstrahlen in die stabilen einfachen Gase umgesetzt werden; dabei kann den gasförmigen Substanzen ein Zusatzgas (z. B. O₂) oder Zusatzstoff (etwa ein Metalloxid) beigefügt werden, welche die Umsetzung unterstützen (etwa zu CO₂);
- UV-Licht, wobei die gasförmigen Substanzen durch UV-Licht und ein Zusatzgas oder Zusatzstoff zu den benötigten einfachen Gasen (z. B. CO₂) umgesetzt werden;
- reaktives Gas, welches selbst oder durch Anregung mit einem Laser die gasförmigen Substanzen umsetzt zu einfacheren Gasen.

Das Verdampfen des Lösungsmittels und das Umsetzen des Teil-Eluats im Übrigen (mit oder ohne Verdampfen des Teil-Eluats im Übrigen) kann innerhalb derselben apparativen Einheit erfolgen. Die einzelnen Verfahrensschritte würden dann jeweils am gleichen Ort und nur zeitlich nacheinander ausgeführt. Alternativ werden für die Verdampfung einerseits und die Umsetzung andererseits verschiedene apparative Einrichtungen verwendet.

Die zu den einfachen Gasen umgesetzten Substanzen können anschließend über eine Transfereinheit einem Isotopenanalysator bzw. Isotopen-Massenspektrometer zugeführt werden. Derartige Transfereinheiten sind grundsätzlich bekannt, siehe Produkt ConFlo IV der Anmelderin bzw. von Thermo Electron Corporation, letztere inzwischen bezeichnet als Thermo Fisher Scientific.

In Fortbildung der Erfindung ist vorgesehen, dass die gasförmigen Umwandlungsprodukte von einem gasförmigen Trägerfluid mitgenommen und dem Isotopenanalysator zugeführt werden. Bei dem gasförmigen Trägerfluid kann es sich insbesondere um ein inertes Gas wie Helium handeln.

Gemäß einem weiteren Gedanken der Erfindung wird der interessierende Teil des Eluats auf einem Substrat aufgefangen. Möglich ist auch eine Aufnahme des Teil-Eluats in einer Kammer. Auch kann das Substrat in einer Kammer angeordnet sein.

Bei der Aufbereitung des Teil-Eluats kann das Trägerfluid vom Substrat aus verdampft werden. Anschließend kann der nicht verdampfte Teil des Teil-Eluats verbrannt - oxidiert oder pyrolysiert - werden. Auch kann das Substrat mit dem Teil-Eluat oder mit einem Teil des Teil-Eluats zur Durchführung einer Verbrennung - Oxidation oder Pyrolyse - in einen Reaktor gegeben werden. Bei der Verbrennung im Reaktor werden dann die gasförmigen Umwandlungsprodukte gebildet.

Vorteilhafterweise ist das Substrat ein Behälter mit einem Hohlraum. Der Behälter kann plastisch verformbar sein und ist vorzugsweise eine Kapsel. Möglich sind aber auch andere Ausbildungen des Substrats, etwa als flacher Streifen. Eine Kapsel kann nach dem Auffangen des Teil-Eluats durch Zusammenbiegen der Wandungen verschlossen werden. Ein Streifen kann zusammengefaltet werden, sodass das aufgenommene Teil-Eluat allseitig umschlossen ist. Das Verschließen des Substrats oder Umschließen des Teil-Eluats kann alternativ auch erst nach dem Verdampfen eines Teils des Teil-Eluats erfolgen.

Das Substrat kann aus den verschiedensten Werkstoffen bestehen, je nach Anwendung und Eluat, etwa aus Zinn, Polymerwerkstoff oder Keramik. Vorteilhaft sind beispielsweise Zinnfolie, Zinnkapseln mit biegbaren Wandungen, Keramikschiffchen oder insbesondere für die Analyse von Stickstoff, Substrate auf der Basis von Kohlenwasserstoffen, etwa Plastikstreifen.

In Fortbildung der Erfindung kann vorgesehen sein, dass bei der Aufbereitung des Teil-Eluats gasförmige Umwandlungsprodukte der Analyten in einem Gaschromatographieverfahren getrennt werden.

Alternativ kann auch der nicht verdampfte Teil des Teil-Eluats mit einem anderen Trägerfluid vom Substrat abgewaschen werden. Aus der derart erhaltenen Flüssigkeit werden gasförmige Umwandlungsprodukte gebildet.

Ein Verdampfen des Teil-Eluats, des aufbereiteten Teil-Eluats, der Trägerfluide und/oder der Analyten kann auch außerhalb des Reaktors durchgeführt werden. Möglich ist auch ein Verdampfen mehrerer Komponenten mit derselben Apparatur: Mit einer ersten Heizstufe wird ein Trägerfluid verdampft und mit einer zweiten Heizstufe die Analyten. Letztere können optional im Gasstrom einem Hochtemperatur-Reaktor zur Verbrennung zugeführt werden.

Nach einem weiteren Gedanken der Erfindung wird von mehreren Isotopen eines Elements, insbesondere von einem Isötopenpaar, nur ein Isotop analysiert und das Isotopenverhältnis durch Berechnung ermittelt, etwa aufgrund der chemischen Zusammensetzung des Analyten oder der Umwandlungsprodukte.

Die erfindungsgemäße Vorrichtung zur Isotopenverhältnisanalyse weist folgende Merkmale auf:
a) mit einem Flüssigchromatographen (10), einer Ausgangsleitung (13), einer Waste-Leitung (14) und einem programmgesteuert umschaltbaren Ventil (12) in der Ausgangsleitung (13),
b) mit einer Einrichtung zum Anschluss an die Ausgangsleitung (13) und zum Aufnehmen eines Teils-Eluats und optional zum Verdampfen eines Teils des aufgenommenen Teil-Eluats, wobei die Einrichtung zum Aufnehmen des Teil-Eluats ein Substrat (11) aufweist, nämlich einen Behälter mit einem Hohlraum,
c) mit einem Reaktor (19) zum Verdampfen eines Teils des Teil-Eluats und Verbrennen des Teil-Eluats im Übrigen oder nur zum Verbrennen des nicht verdampften Teils des Teil-Eluats,
d) mit einer Quelle für die Zufuhr von gasförmigem Trägerfluid zum Reaktor,
e) mit einem Isotopen-Massenspektrometer (IRMS) als Isotopenanalysator (20), dem Umwandlungsprodukte aus dem Reaktor (19) zuführbar sind.

Bei der dem Flüssigchromatographen (10) nachgeordneten Einrichtung zum Aufnehmen eines Teil-Eluats kann es sich um einen Autosampler handeln. Derartige Einrichtungen sind in den unterschiedlichsten Ausstattungen und Variationen bekannt. Der Autosampler dient als programmgesteuerte Halte-und Fördereinrichtung für das Substrat. Die Abgabe des interessierenden Teil-Eluats auf das Substrat kann beispielsweise erfolgen durch insbesondere programmgesteuertes Umschalten zwischen verschiedenen Leitungen am Ausgang der LC-Einrichtung. Die Steuerung oder Regelung der Umschaltung erfolgt vorzugsweise in Abhängigkeit vom Zeitablauf des Flüssigchromatographieverfahrens oder vom Ausgangssignal eines dem LC zugeordneten Detektors.

Nach einem weiteren Gedanken der Erfindung ist der Reaktor Teil eines Element-Analysators. Auch dies trägt zu einem möglichst automatisierten Ablauf bei. Die Volumina von Reaktor und/oder Element-Analysator sind vorzugsweise an die erwarteten Analyt-Mengen angepasst.

In Fortbildung der Erfindung ist vorgesehen, dass die dem LC nachgeordnete Einrichtung zum Aufnehmen des Teil-Eluats einen Träger für ein das Teil-Eluat aufnehmende Substrat aufweist, eine Heizeinrichtung zum Erwärmen des Substrats oder des darauf befindlichen Teil-Eluats und eine Fördereinrichtung zum Bewegen des Trägers aus einer dem LC benachbarten Position in eine dem Reaktor benachbarte Position.

Verfahren und Vorrichtung gemäß der Erfindung sind vorzugsweise verwendbar zur Analyse von Lebensmitteln, Lebensmittelzusatzstoffen, Blut, Plasma und Urin. Zielsubstanzen (Analyten) sind insbesondere Pharmazeutika, Stoffwechselprodukte, Steroide, Proteine, Peptide, Aminosäuren, RNA/DNA, organische Säuren, Pestizide und Nitrate. Außerdem besteht eine bevorzugte Anwendung in der Bestimmung eines Isotopen-Fingerabdrucks, nämlich in der Isotopenverhältnisanalyse für mehr als ein Element, insbesondere mindestens zwei Elemente aus den Elementen Kohlenstoff, Sauerstoff, Stickstoff, Schwefel und Wasserstoff.

Bei dem Isotopenanalysator handelt es sich vorzugsweise um ein IRMS oder um eine Laserabsorptionsmesseinrichtung.

Vorteilhafte Weiterbildungen der Erfindung ergeben sich aus den Ansprüchen und aus der Beschreibung im Übrigen. Bevorzugte Ausführungsbeispiele der Erfindung werden nachfolgend anhand von Zeichnungen näher erläutert. Es zeigen:
- Fig. 1: eine schematische Darstellung einer erfindungsgemäßen Vorrichtung,
- Fig. 2: eine Abwandlung der Vorrichtung gemäß Fig. 1,
- Fig. 3: den schematischen Aufbau einer erfindungsgemäßen Anlage,
- Fig. 4 bis 7: die Abfolge der einzelnen Schritte bei der Erzeugung eines einfachen Gases für die Isotopenanalyse aus einem Teil-Eluat.

In einem Flüssigchromatographen 10, insbesondere HPLC, wird eine Probe einer geeigneten chromatographischen Trennung unterworfen. Ein Teil des anfallenden Eluats wird aufgefangen auf einem geeigneten Substrat 11. Das Auffangen des interessierenden Teil-Eluats ist möglich beispielsweise durch programmgesteuertes Umschalten eines Ventils 12 in einer zum Substrat 11 hinführenden Ausgangsleitung 13 des Flüssigchromatographen 10. Stromaufwärts des Ventils 12 ist die Ausgangsleitung 13 mit einer Waste-Leitung 14 verbunden. Die Programmsteuerung kann beispielsweise zeitabhängig oder in Abhängigkeit vom Ausgangssignal eines nicht gezeigten Detektors erfolgen, sodass nur das interessierende Teil-Eluat auf das Substrat 11 gelangt.

Die chromatographische Trennung und das Auffangen des interessierenden Teil-Eluats können auch zunächst mehrfach hintereinander durchgeführt werden. Das interessierende Teil-Eluat wird dann gesammelt, etwa auf dem Substrat 11 oder vor Erreichen desselben.

Das Substrat 11 ist auf einem Autosampler 15 programmgesteuert bewegbar in eine Position 16, in welcher das im Teil-Eluat enthaltene Lösemittel verdampfen kann. Hierzu kann an dieser Position eine Wärmequelle 17 vorgesehen sein.

Anschließend ist das Substrat bewegbar in eine Position 18, in welcher eine Überführung des Substrats mit dem darauf befindlichen Rest des Teil-Eluats in einen Reaktor 19 möglich ist. Im Reaktor 19 findet eine Verbrennung bzw. Oxidation oder Pyrolyse statt. Die dabei anfallenden Gase werden in einen Isotopenanalysator 20 geleitet. Vorzugsweise handelt es sich dabei um ein Isotopen-Massenspektrometer (IRMS).

Zwischen Reaktor 19 und Isotopenanalysator 20 können die anfallenden Gase durch eine entsprechende Einrichtung aufgetrennt werden, etwa durch einen Gaschromatographen 21.

Als Substrate sind beispielsweise Zinnkapseln vorgesehen, in denen das interessierende Teil-Eluat gesammelt wird. Der Reaktor 19 kann Teil eines Element-Analysators sein, beispielsweise des Typs Finnigan TC/EA der Anmelderin. Vorteilhaft ist eine Anpassung der Vorrichtung an die relativ kleinen Probenmengen durch Verkleinerung bzw. Herabskalierung der Volumina in der Vorrichtung.

Das Substrat 11 kann auch nach Art eines Streifens ausgebildet sein. Das Teil-Eluat wird auf dem Streifen gesammelt, das im Teil-Eluat enthaltene Lösemittel wird verdampft und der Rest wird dem Reaktor 19 zugeführt. Bei der Isotopenanalyse von Stickstoff kann der Streifen statt aus Zinn beispielsweise aus Kohlenwasserstoffen bestehen.

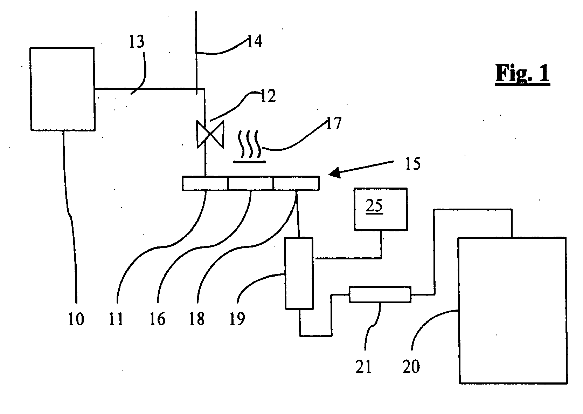

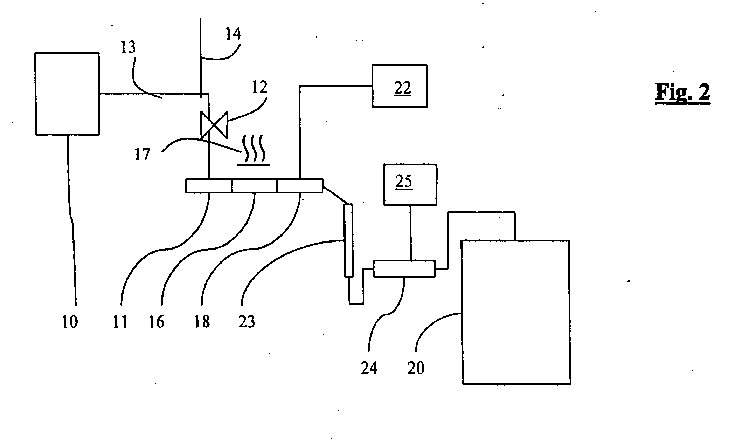

Eine Abwandlung der Vorrichtung zeigt Fig. 2. Im Unterschied zu Fig. 1 ist der Position 18 des Substrats eine Lösemittelquelle 22 mit einer nicht näher gezeigten Spülvorrichtung zugeordnet. In Position 16 wird das Lösemittel des Flüssigchromatographen 10 verdampft. In Position 18 wird der Rest auf dem Substrat von einem geeigneten Lösemittel heruntergewaschen und optional einer Einrichtung 23 zum Reinigen oder Konzentrieren zugeführt, bevor das derart aufbereitete Teil-Eluat zur Bildung eines oder mehrerer gasförmiger Umwandlungsprodukte der Analyten weiter aufbereitet wird in einer entsprechenden Einrichtung 24. Dabei kann es sich beispielsweise um einen Element-Analysator, einen Reaktor, eine Elektrolyse-Einrichtung oder eine andere Einrichtung zur Erzeugung der gewünschten Umwandlungsprodukte handeln. Am Ende der Kette steht wieder der Isotopenanalysator 20.

Dem Reaktor 19 ist in Fig. 1 eine Trägergasquelle 25 zugeordnet. Durch die Trägergasströmung gelangen die gasförmigen Umwandlungsprodukte in den Gaschromatographen 21 oder direkt in den Isotopenanalysator 22. Analog dazu ist in Fig. 2 die Trägergasquelle 25 der Einrichtung 24 zugeordnet.

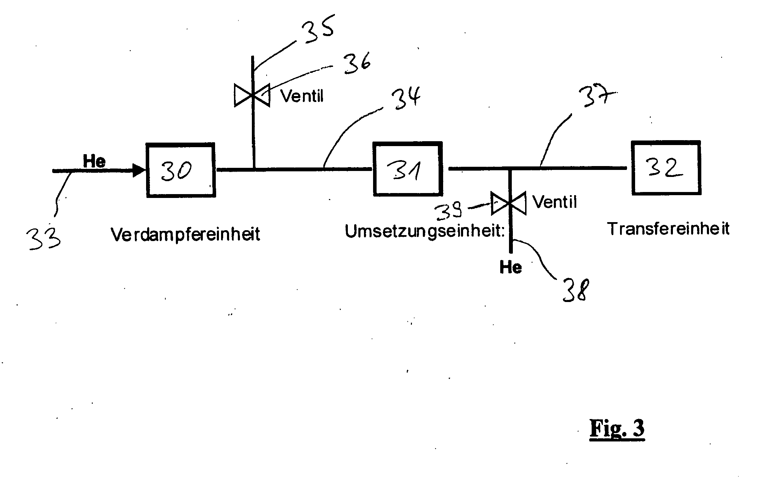

Weitere Ausführungsformen werden nachfolgend anhand der Fig. 3 bis 7 erläutert. Gemäß Fig. 3 sind aufeinanderfolgend angeordnet eine Verdampfereinheit 30, eine Umsetzungseinheit 31 und eine Transfereinheit 32.

Der Verdampfereinheit 30 wird über eine Leitung 33 ein Teil-Eluat eines Flüssigchromatographen zusammen mit einem Trägergas (z. B. Helium) zugeführt. Möglich ist auch die Zufuhr des Teil-Eluats über eine gesonderte Leitung in der Verdampfereinheit 30.

In der Verdampfereinheit wird dem Teil-Eluat Energie zugeführt, etwa durch eine Heizung, eine Lasereinrichtung, eine Mikrowelleneinrichtung oder eine Einrichtung zur Abgabe elektromagnetischer Strahlung für eine insbesondere resonante Aufheizung. Möglich ist auch eine nicht-resonante Aufheizung. Daneben kann in der Verdampfereinheit die Zugabe einer reagierenden Substanz vorgesehen sein, etwa für chemisch selektives Ätzen zur Verdampfung des Lösungsmittels und/oder des (vom Lösungsmittel befreiten) Teil-Eluats im Übrigen.

Verdampfereinheit 30 und Umsetzungseinheit 31 sind durch eine Leitung 34 miteinander verbunden, von der eine Spül- oder Waste-Leitung 35 abgeht. Letztere ist mit einem Spül- oder Waste-Ventil 35 versehen. Bei geöffnetem Ventil 35 können die in der Verdampfereinheit 30 erzeugten Gase über die Leitung 35 abgeführt werden.

In die Umsetzungseinheit 31 gelangen die den Analyten enthaltenden Gase und werden dort zu einfachen Gasen umgesetzt. Hierzu kann die Umsetzungseinheit eine Heizeinrichtung, eine Lasereinrichtung, eine Mikrowelleneinrichtung, eine Einrichtung zur Abgabe elektromagnetischer Strahlung und/oder eine Einrichtung zum chemisch selektiven Ätzen aufweisen, etwa durch Zufuhr einer weiteren Substanz.

Aus der Umsetzungseinheit 31 gelangen die erzeugten einfachen Gase über eine Leitung 37 in die Transfereinheit 32. Mit der Leitung 37 verbunden ist eine Leitung 38 für die Zufuhr von Trägergas, insbesondere Helium. Die Leitung 38 ist durch ein Ventil 39 absperrbar.

Die Transfereinheit stellt die Verbindung her zum nicht dargestellten Isotopenanalysator, etwa zu einem Isotopen-Massenspektrometer. Als Transfereinheit kann beispielsweise die von der Anmelderin oder der Thermo Electron Corporation angebotene Einrichtung ConFlo IV verwendet werden.

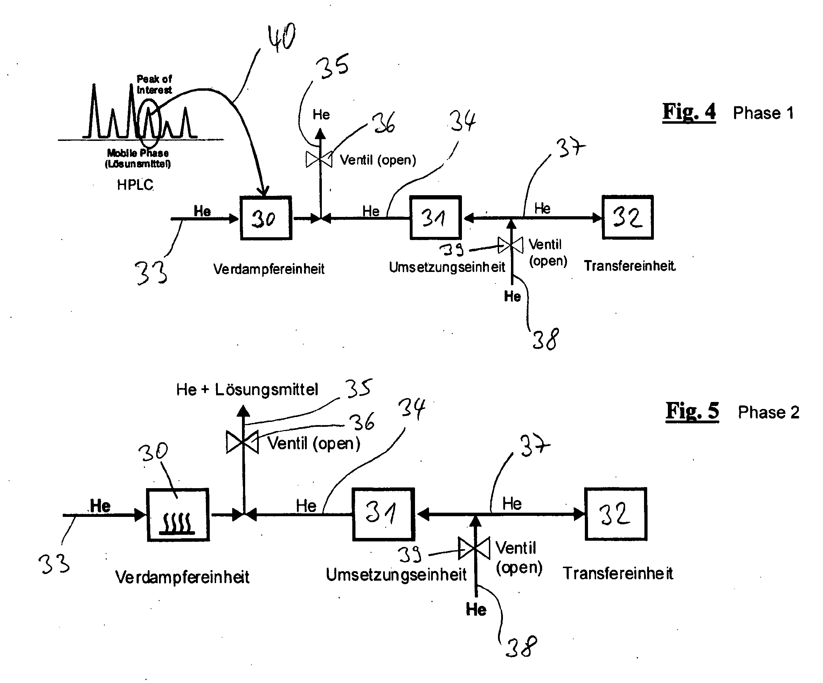

Die Fig. 4 bis 7 bauen aufeinander auf und zeigen Phasen 1 bis 4 der Aufbereitung einer zu untersuchenden Substanz für die Isotopenanalyse.

In Phase 1 (Fig. 4) wird der Verdampfereinheit 30 ein interessierender Ausschnitt aus dem Eluat eines HPLC zugeführt, ein Teil-Eluat. In dieser Phase sollen die Ventile 36 und 39 geöffnet sein. Die Zufuhr des Teil-Eluats in die Verdampfereinheit 30 erfolgt über eine Leitung 40.

In Phase 2 (Fig. 5) wird das Lösungsmittel aus dem Teil-Eluat verdampft und über die Leitung 35 aus dem Prozess herausgeführt. Hierzu sind die Ventile 36, 39 offen und es wird ein Trägergas oder Spülgas, vorzugsweise Helium, zugeführt einerseits über die Leitung 33 und andererseits über die Leitung 38, so dass das in der Verdampfereinheit 30 anfallende gasförmige Lösungsmittel nur über die Leitung 35 abströmen kann und beispielsweise nicht in die Umsetzungseinheit 31 gelangt.

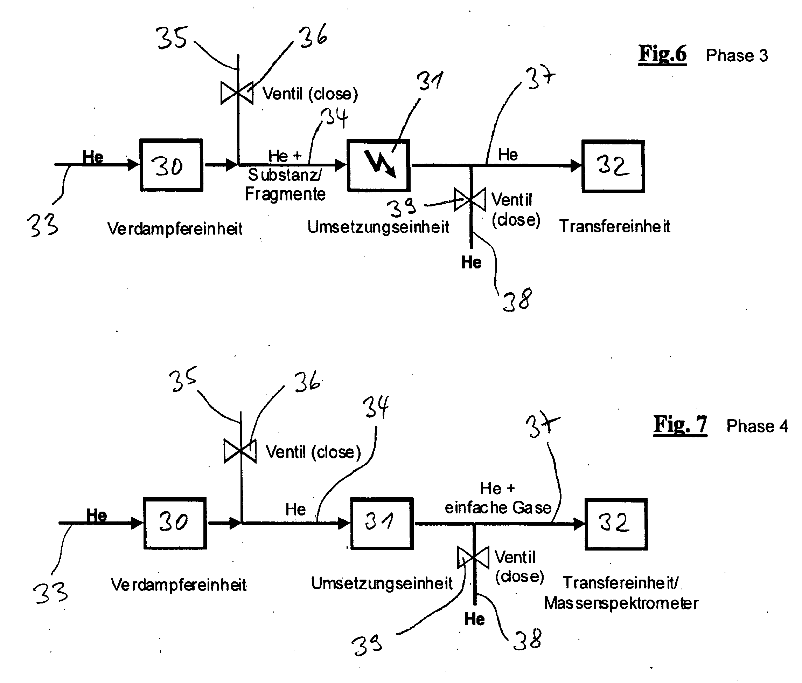

In Phase 3 (Fig. 6) wird in der Verdampfereinheit 30 auch der vom Lösungsmittel befreite Rest des Teil-Eluats in Gasform übergeführt, insbesondere durch weiteres Erhitzen. Dabei können auch gasförmige Fragmente gebildet werden. Die Ventile 36 und 39 sind geschlossen. Über die Leitung 33 strömt Trägergas oder Spülgas zu, so dass das Gas aus der Verdampfereinheit 30 in die Umsetzungseinheit 31 strömt. In der Umsetzungseinheit 31 findet eine Umsetzung der Gase zu den für die Analyse benötigten einfachen Gasen statt. Vorzugsweise handelt es sich bei diesen einfachen Gasen um H₂, CO, CO₂, N₂, Cl₂, HCl, CH₄ und/oder SO₂. Auch andere Gase sind möglich.

In Phase 4 (Fig. 7) sind die Ventile 36, 39 weiterhin geschlossen. Die in der Umsetzungseinheit 31 erzeugten einfachen Gase werden mit dem Trägergas- oder Spülgasstrom in die Transfereinheit 32 geführt und von dort dem nicht gezeigten Massenspektrometer zugeführt.

Die Übergänge von Phase 1 zu Phase 2 und von Phase 3 zu Phase 4 sind vorzugsweise kontinuierlich, bedingt durch die Gasströme und Ventilstellungen.

Verdampfereinheit 30 und Umsetzungseinheit 31 können auch in einer Einheit zusammengefasst werden, insbesondere dann, wenn Verdampfung und Umsetzung mit denselben Mitteln durchgeführt werden sollen, etwa durch Aufheizen mit einer elektrischen Widerstandsheizung.

### Bezugszeichenliste

- 10: Flüssigchromatograph
- 11: Substrat
- 12: Ventil
- 13: Ausgangsleitung
- 14: Waste-Leitung
- 15: Autosampler
- 16: Position des Substrats
- 17: Wärmequelle
- 18: Position des Substrats
- 19: Reaktor
- 20: Isotopenanalysator
- 21: Gaschromatograph
- 22: Lösemittelquelle
- 23: Einrichtung zum Reinigen/Konzentrieren
- 24: Einrichtung
- 25: Gasquelle
- 30: Verdampfungseinheit
- 31: Umsetzungseinheit
- 32: Transfereinheit
- 33: Leitung
- 34: Leitung

## Patentansprüche

1. Verfahren zur Isotopenverhältnisanalyse von Kohlenstoff, Stickstoff, Sauerstoff, Wasserstoff und/oder Schwefel aus flüssigen organischen Proben, in Verbindung mit einem vorangehenden Flüssigchromatographie-Verfahren, mit folgenden Schritten:
a) Durchführung eines Flüssigchromatographie-Verfahrens und dadurch Bereitstellung eines Eluats, welches zumindest ein flüssiges Trägerfluid und einen oder mehrere Analyten enthält,
b) Auffangen des Eluats auf einem Substrat (11), wobei nur ein interessierender Teil des Eluats, nämlich ein Teil-Eluat aufgefangen wird, wobei die Abgabe des interessierenden Teil-Eluats auf das Substrat durch programmgesteuertes Umschalten zwischen verschiedenen Leitungen am Ausgang einer Flüssigchromatographie-Einrichtung erfolgt, insbesondere in Abhängigkeit vom Zeitverlauf des Flüssigchromatographie-Verfahrens oder vom Ausgangssignal eines Detektors,
c) als Substrat (11) wird ein Behälter mit einem Hohlraum verwendet,
d) Aufbereitung des Teil-Eluats unter Bildung eines oder mehrerer gasförmiger Umwandlungsprodukte der Analyten, nämlich von einfachen stabilen Gasen wie CO2, N2, CO, H2, Cl2, HCl, CH4, SO2 oder anderen Gasen, wobei das Trägerfluid vom Substrat (11) aus verdampft oder in gasförmige Fragmente überführt wird, und anschließend der nicht verdampfte oder in gasförmige Fragmente überführte Teil des Teil-Eluats verbrannt - oxidiert oder pyrolisiert - wird,
e) zur Durchführung der Verbrennung - Oxidation oder Pyrolyse - wird das Substrat (11) mit dem Teil-Eluat oder mit einem Teil des Teil-Eluats in einen Reaktor (19) gegeben, so dass bei der Verbrennung im Reaktor die gasförmigen Umwandlungsprodukte der Analyten gebildet werden,
f) Zufuhr der gasförmigen Umwandlungsprodukte zu einem Isotopen-Massenspektrometer (IRMS).

2. Verfahren nach Anspruch 1, **dadurch gekennzeichnet, dass** das Verdampfen des Trägerfluids oder das Überführen des Trägerfluids in gasförmige Fragmente durch mindestens einen der folgenden Schritte erfolgt:
a) Aufheizen des Teil-Eluats,
b) Lasereinwirkung,
c) resonante Energieeinkopplung durch elektromagnetische Strahlung,
d) nicht-resonante Energieeinkopplung durch elektromagnetische Strahlung,
e) chemisch-selektive Umsetzung.

3. Verfahren nach Anspruch 1 oder 2, **dadurch gekennzeichnet, dass** als Substrat ein plastisch verformbarer Behälter verwendet wird.

4. Verfahren nach Anspruch 1 oder einem der weiteren Ansprüche, **dadurch gekennzeichnet, dass** die gasförmigen Umwandlungsprodukte von einem gasförmigen Trägerfluid mitgenommen und dem Isotopen-Massenspektrometer zugeführt werden.

5. Verfahren nach Anspruch 1 oder einem der weiteren Ansprüche, **dadurch gekennzeichnet, dass** als Substrat (11) eine Kapsel verwendet wird.

6. Verfahren nach Anspruch 1 oder einem der Ansprüche 2 bis 4, **dadurch gekennzeichnet, dass** als Substrat (11) eine Zinnkapsel oder ein Keramikschiffchen verwendet werden.

7. Verfahren nach Anspruch 1 oder einem der weiteren Ansprüche, **dadurch gekennzeichnet, dass** das Substrat aus Zinn, Keramik, Polymerwerkstoff oder aus Kohlenwasserstoffen besteht.

8. Verfahren nach Anspruch 1 oder einem der weiteren Ansprüche, **dadurch gekennzeichnet, dass** bei der Aufbereitung des Teil-Eluats gasförmige Umwandlungsprodukte der Analyten in einem Gaschromatographie-Verfahren getrennt werden.

9. Verfahren nach Anspruch 1 oder einem der Ansprüche, 2 bis 5, 7 oder 8, **gekennzeichnet durch** die Isotopenanalyse von Stickstoff.

10. Verfahren nach Anspruch 9, **dadurch gekennzeichnet, dass** ein Substrat auf der Basis von Kohlenwasserstoff verwendet wird.

11. Verfahren nach Anspruch 1 oder einem der weiteren Ansprüche, **dadurch gekennzeichnet, dass** zu einem ausgewählten Element nur ein Isotop analysiert und das Verhältnis dieses Isotops zu mindestens einem anderen Isotop durch Berechnung ermittelt wird.

12. Vorrichtung zur Isotopenverhältnisanalyse, mit folgenden Merkmalen:
a) mit einem Flüssigchromatographen (10), einer Ausgangsleitung (13), einer Waste-Leitung (14) und einem programmgesteuert umschaltbaren Ventil (12) in der Ausgangsleitung (13),
b) mit einer Einrichtung zum Anschluss an die Ausgangsleitung (13) und zum Aufnehmen eines Teils-Eluats und optional zum Verdampfen eines Teils des aufgenommenen Teil-Eluats, wobei die Einrichtung zum Aufnehmen des Teil-Eluats ein Substrat (11) aufweist, nämlich einen Behälter mit einem Hohlraum,
c) mit einem Reaktor (19) zum Verdampfen eines Teils des Teil-Eluats und Verbrennen des Teil-Eluats im Übrigen oder nur zum Verbrennen des nicht verdampften Teils des Teil-Eluats,
d) mit einer Quelle für die Zufuhr von gasförmigem Trägerfluid zum Reaktor,
e) mit einem Isotopen-Massenspektrometer (IRMS) als Isotopenanalysator (20), dem Umwandlungsprodukte aus dem Reaktor (19) zuführbar sind.

13. Vorrichtung nach Anspruch 12, **dadurch gekennzeichnet, dass** die dem Flüssigchromatographen (10) nachgeordnete Einrichtung zum Aufnehmen des Teil-Eluats ein Autosampler (15) ist.

14. Vorrichtung nach Anspruch 12 oder 13, **dadurch gekennzeichnet, dass** der Reaktor (19) Teil eines Element-Analysators ist.

15. Vorrichtung nach Anspruch 12 oder einem der weiteren Ansprüche, **dadurch gekennzeichnet, dass** die dem Flüssigchromatograph (10) nachgeordnete Einrichtung zum Aufnehmen des Teil-Eluats einen Träger für das das Teil-Eluat aufnehmende Substrat (11) aufweist, eine Heizeinrichtung zum Erwärmen des Substrats oder des darauf befindlichen Teil-Eluats und eine Fördereinrichtung zum Bewegen des Trägers aus einer dem Flüssigchromatographen (10) benachbarten Position in eine dem Reaktor (19) benachbarte Position.

## Claims

1. Process for isotope ratio analysis of carbon, nitrogen, oxygen, hydrogen and/or sulphur from liquid organic samples, in conjunction with a preceding liquid chromatography process, comprising the following steps:
a) performing a liquid chromatography process and thus providing an eluate which comprises at least one liquid carrier fluid and one or more analytes,
b) collecting the eluate on a substrate (11), wherein only a portion of interest from the eluate, namely an eluate portion, is collected, wherein the eluate portion of interest is released to the substrate by program-controlled switching between different lines at the outlet of a liquid chromatography especially as a function of the passage of time in the liquid chromatography process or of the output signal of a detector,
c) a vessel with a cavity is used as substrate (11),
d) processing the eluate portion to form one or more gaseous conversion products of the analytes, namely simple stable gases such as CO₂, N₂, CO, H₂, Cl₂, HCl, CH₄, SO₂ or other gases, wherein the carrier fluid is evaporated from the substrate (11) or converted to gaseous fragments, and the portion of the eluate portion which has not been evaporated or converted to gaseous fragments is subsequently combusted - oxidized or pyrolyzed,
e) to perform the combustion - oxidation or pyrolysis - the substrate (11) with the eluate portion or with a portion of the eluate portion is introduced into a reactor (19) such that the combustion in the reactor forms the gaseous conversion products of the analytes,
f) supplying the gaseous conversion products to an isotope mass spectrometer (IRMS).

2. Process according to Claim 1, **characterized in that** the carrier fluid is evaporated or the carrier fluid is converted to gaseous fragments by at least one of the following steps:
a) heating the eluate portion,
b) laser action,
c) resonant energy injection by means of electromagnetic radiation,
d) non-resonant energy injection by means of electromagnetic radiation,
e) chemically selective conversion.

3. Process according to Claim 1 or 2, **characterized in that** the substrate (11) used is a plastically deformable vessel.

4. Process according to Claim 1 or one of the further claims, **characterized in that** the gaseous conversion products are entrained by a gaseous carrier fluid and supplied to the isotope mass spectrometer.

5. Process according to Claim 1 or one of the further claims, **characterized in that** the substrate (11) used is a capsule.

6. Process according to Claim 1 or one of Claims 2 to 4, **characterized in that** the substrate (11) used is a tin capsule or a ceramic boat.

7. Process according to Claim 1 or one of the further claims, **characterized in that** the substrate (11) consists of tin, ceramic, polymer material or of hydrocarbons.

8. Process according to Claim 1 or one of the further claims, **characterized in that** the processing of the eluate portion involves separating gaseous conversion products of the analytes in a gas chromatography process.

9. Process according to Claim 1 or one of Claims 2 to 5, 7 or 8 **characterized by** the isotope analysis of nitrogen.

10. Process according to Claim 9, **characterized in that** a substrate based on hydrocarbon is used.

11. Process according to Claim 1 or one of the further claims, **characterized in that** only one isotope is analyzed for a selected element and the ratio of this isotope to at least one other isotope is determined by calculation.

12. Apparatus for isotope ratio analysis, comprising the following features:
a) comprising a liquid chromatograph (10), an outlet (13), a waste line (14) and a program-controlled switchable valve (12) in the outlet line (13),
b) comprising a device for connection to the outlet line (13) and for taking up an eluate portion and optionally for evaporating a portion of the eluate portion taken up, wherein the device for taking up the eluate portion has a substrate (11), namely a vessel with a cavity,
c) comprising a reactor (19) for evaporating a portion of the eluate portion and combusting the rest of the eluate portion, or only for combusting the unevaporated portion of the eluate portion,
d) comprising a source for the supplying of gaseous carrier fluid to the reactor,
e) comprising an isotope mass spectrometer (IRMS) as isotope analyzer (20), to which conversion products from the reactor (19) can be supplied.

13. Apparatus according to Claim 12, **characterized in that** the device arranged downstream of the liquid chromatograph (10) for taking up the eluate portion is an autosampler (15).

14. Apparatus according to Claim 12 or 13, **characterized in that** the reactor (19) is part of an element analyzer.

15. Apparatus according to Claim 12 or one of the further claims, **characterized in that** the device arranged downstream of the liquid chromatograph (10) for taking up the eluate portion has a carrier for the substrate (11) which takes up the eluate portion, a heating device for heating the substrate or the eluate portion present thereon and a conveying device for moving the carrier from a position adjacent to the liquid chromatograph (10) into a position adjacent to the reactor (19).

## Revendications

1. Procédé pour analyser des rapports isotopiques de carbone, azote, oxygène, hydrogène et/ou soufre dans des échantillons organiques liquides, en liaison avec un procédé antérieur de chromatographie en phase liquide, comportant les étapes suivantes:
a) exécuter un procédé de chromatographie en phase liquide et produire ainsi un éluat, qui contient au moins un fluide porteur liquide et une ou plusieurs analytes,
b) capturer l'éluat sur un substrat (11), dans lequel on ne capture qu'une partie intéressante de l'éluat, à savoir un éluat partiel, dans lequel l'apport de l'éluat partiel intéressant sur le substrat est effectué par une commutation commandée par un programme entre différentes conduites à la sortie d'un dispositif de chromatographie en phase liquide, en particulier en fonction de l'écoulement du temps du procédé de chromatographie en phase liquide ou du signal de sortie d'un détecteur,
c) comme substrat (11), on utilise un récipient avec une cavité,
d) préparer l'éluat partiel avec formation d'un ou de plusieurs produits de conversion gazeux des analytes, à savoir des gaz simples stables comme CO2, N2, CO, H2, Cl2, HCl, CH4, SO₂ ou d'autres gaz, dans lequel le fluide porteur est vaporisé à partir du substrat (11) ou transformé en fragments gazeux, et ensuite la partie de l'éluat partiel non vaporisée ou non transformée en fragments gazeux est brûlée, oxydée ou pyrolysée,
e) pour l'exécution de la combustion - de l'oxydation ou de la pyrolyse - le substrat (11) est introduit dans un réacteur (19) avec l'éluat partiel ou avec une partie de l'éluat partiel, de telle manière que les produits de conversion gazeux des analytes soient formés lors de la combustion dans le réacteur,
f) envoi des produits de conversion gazeux à un spectromètre de masse isotopique (IRMS).

2. Procédé selon la revendication 1, **caractérisé en ce que** la vaporisation du fluide porteur ou la transformation du fluide porteur en fragments gazeux est effectuée par au moins une des étapes suivantes:
a) chauffage de l'éluat partiel,
b) action d'un laser,
c) couplage d'énergie résonant par rayonnement électromagnétique,
d) couplage d'énergie non résonant par rayonnement électromagnétique,
e) conversion chimique sélective.

3. Procédé selon la revendication 1 ou 2, **caractérisé en ce que** l'on utilise comme substrat un récipient déformable plastiquement.

4. Procédé selon la revendication 1 ou l'une quelconque des autres revendications, **caractérisé en ce que** les produits de conversion gazeux sont emportés par un fluide porteur gazeux et sont envoyés au spectromètre de masse isotopique.

5. Procédé selon la revendication 1 ou l'une quelconque des autres revendications, **caractérisé en ce que** l'on utilise comme substrat (11) une capsule.

6. Procédé selon la revendication 1 ou l'une quelconque des revendications 2 à 4, **caractérisé en ce que** l'on utilise comme substrat (11) une capsule d'étain ou une barquette en céramique.

7. Procédé selon la revendication 1 ou l'une quelconque des autres revendications, **caractérisé en ce que** le substrat se compose d'étain, de céramique, de matériau polymère ou de matériaux hydrocarbonés.

8. Procédé selon la revendication 1 ou l'une quelconque des autres revendications, **caractérisé en ce que**, lors de la préparation de l'éluat partiel, on sépare les produits de conversion des analytes par un procédé de chromatographie en phase gazeuse.

9. Procédé selon la revendication 1 ou l'une quelconque des revendications 2 à 5, 7 ou 8, **caractérisé par** l'analyse isotopique de l'azote.

10. Procédé selon la revendication 9, **caractérisé en ce que** l'on utilise un substrat à base d'hydrocarbure.

11. Procédé selon la revendication 1 ou l'une quelconque des autres revendications, **caractérisé en ce que** l'on n'analyse qu'un isotope pour un élément sélectionné et on détermine le rapport de cet isotope à au moins un autre isotope par le calcul.

12. Dispositif pour analyser des rapports isotopiques, présentant les caractéristiques suivantes:
a) avec un chromatographe en phase liquide (10), une conduite de sortie (13), une conduite d'évacuation (14) et une soupape commutable par commande programmée (12) dans la conduite de sortie (13),
b) avec un dispositif pour le raccordement à la conduite de sortie (13) et pour la capture d'un éluat partiel et en option pour la vaporisation d'une partie de l'éluat partiel capturé, dans lequel le dispositif pour capturer l'éluat partiel présente un substrat (11), à savoir un récipient avec une cavité,
c) avec un réacteur (19) pour vaporiser une partie de l'éluat partiel et pour le reste brûler l'éluat partiel ou pour brûler la partie non vaporisée de l'éluat partiel,
d) avec une source pour l'envoi de fluide porteur gazeux au réacteur,
e) avec un spectromètre de masse isotopique (IRMS) comme analyseur d'isotopes (20), auquel des produits de conversion provenant du réacteur (19) peuvent être envoyés.

13. Dispositif selon la revendication 12, **caractérisé en ce que** le dispositif installé en aval du chromatographe en phase liquide (10) pour capturer l'éluat partiel est un auto-échantillonneur (15).

14. Dispositif selon la revendication 12 ou 13, **caractérisé en ce que** le réacteur (19) fait partie d'un analyseur d'éléments.

15. Dispositif selon la revendication 12 ou l'une quelconque des autres revendications, **caractérisé en ce que** le dispositif installé en aval du chromatographe en phase liquide (10) pour capturer l'éluat partiel présente un support pour le substrat (11) recevant l'éluat partiel, un dispositif de chauffage pour chauffer le substrat ou l'éluat partiel se trouvant sur celui-ci et un dispositif de transport pour déplacer le support depuis une position proche du chromatographe en phase liquide (10) jusqu'à une position proche du réacteur (19).
